# EUROPÄISCHE PATENTSCHRIFT

(11) **EP 1 129 150 B1**
(45) Veröffentlichungstag und Bekanntmachung des Hinweises auf die Patenterteilung: **01.12.2004**
(21) Anmeldenummer: 99948848.9
(22) Anmeldetag: 23.09.1999
(51) Int. Cl.: C09K 9/02, G02F 1/15

(54) **ANORDNUNG AUF BASIS VON POLY-(3,4-DIOXYTHIOPHEN)-DERIVATEN, DIE MIT PROTONEN ELEKTROCHROM GESCHALTET WERDEN**
ARRANGEMENT BASED ON POLY-(3,4-DIOXYTHIOPHENE) DERIVATIVES WHICH ARE ELECTROCHROMICALLY SWITCHED WITH PROTONS
SYSTEME A BASE DE DERIVES DE POLY-(3,4-DIOXYTHIOPHENE) COMMUTES PAR ELECTROCHROMIE AVEC DES PROTONS

(30) Priorität: 06.10.1998 DE 19845881
(43) Veröffentlichungstag der Anmeldung: 05.09.2001
(73) Patentinhaber: BAYER AG, 51368 Leverkusen (DE)
(72) Erfinder: HEUER, Helmut-Werner, D-47829 Krefeld (DE); WEHRMANN, Rolf, D-47800 Krefeld (DE)
(86) Internationale Anmeldenummer: PCT/EP1999/007104
(87) Internationale Veröffentlichungsnummer: WO 2000/020528

(56) Entgegenhaltungen:
- EP-A- 0 942 061
- US-A- 5 187 608
- GUSTAFSSON J C ET AL: "IN SITU SPECTROSCOPIC INVESTIGATIONS OF ELECTROCHROMISM AND ION TRANSPORT IN A POLY(3,4-ETHYLENEDIOXYTHIOPHENE) ELECTRODE IN A SOLID STATE ELECTROCHEMICAL CELL" SOLID STATE IONICS,NL,NORTH HOLLAND PUB. COMPANY. AMSTERDAM, Bd. 69, Nr. 2, Seite 145-152 XP000574078 ISSN: 0167-2738

## Beschreibung

Die vorliegende Erfindung betrifft elektrochrome Anordnungen mit steuerbarer Lichtdurchlässigkeit, deren Herstellung sowie deren Verwendung.

Scheiben von Fahrzeugen können bisher nicht in ihrer Transparenz für elektromagnetische Strahlung geregelt werden. Phototrope Gläser finden bisher nur als Brillengläser Verwendung und weisen nur eine relativ geringe Änderung der Transmission auf. Scheiben an Gebäuden werden bisher mit Vorhängen, Fensterläden, Rolläden oder anderen beweglichen mechanischen Elementen verdunkelt. Elektrochrome Vorrichtungen können also auf vielfältige Weise Anwendung finden. So seien zusammenfassend als Beispiele genannt:

### 1. Fahrzeugverglasung (Fensterscheiben oder Autosonnendächer)

Eine elektrochrome Vorrichtung eignet sich als Sonnen- oder Blendschutz in Kraftfahrzeugen. Front-, Seiten- und Heckverglasung oder Glasdächer können einbezogen werden. Der Grad der Abdunkelung kann zonenweise und stufenlos an die Bedürfnisse des Fahrers an den Sonnenstand und an die aktuelle Fahrsituation angepaßt werden. Die Integration in ein rechnergesteuertes Kontrollsystem ist möglich. Eine Kombination von aktivem Element mit einer Verbundglaseinheit ist ebenso möglich, wie das Aufbringen eines Foliensystems auf die Sicherheitsscheiben.

Die Durchlässigkeit der Scheiben kann von Hand oder automatisch gesteuert werden, was zu einem wirksamen Blendschutz bei Nachtfahrten, automatischer Anpassung des Helligkeitspegels bei Ein- und Ausfahrten von Tunneln und Parkhäusem und zum Schutz gegen Einbruch und Diebstahl des geparkten Fahrzeugs durch Verhinderung des Einblicks ins Wageninnere genutzt werden kann. Eine übermäßige Erwärmung des Innenraums im Sommer, insbesondere bei geparktem Fahrzeug, kann verhindert werden (vgl. EP-A 0 272 428).

### 2. Gebäudeverglasung (elektrochromes Fenster)

In Gebäuden eignen sich elektrochrome Anordnungen zur Abdunkelung von Seitenfenstem und Dachfenstern von Gebäuden, Wohnräumen, Arbeitsräumen oder Gewächshäusern als steuerbarer Sonnenschutz (sichtbarer Spektralbereich) und Wärmeschutz (IR-Bereich) sowie als Sichtschutz (sichtbarer Spektralbereich). Zum Schutz vor Einbrüchen können Verglasungen von Bankschaltern oder Schaufenster auf Knopfdruck verdunkelt werden. Glastüren können bei Annäherung von Personen automatisch sichtbar gemacht werden, um Verletzungen zu vermeiden. Durch die Möglichkeit, nahezu alle Farbtöne zu erzeugen, ist auch eine gestalterische Einbeziehung der Verglasung in die Fassade eines Gebäudes möglich. Der Energieverbrauch für die großflächige Steuerung der Fenstertransparenz ist gering, insbesondere wenn der Memory-Effekt des Systems ausgenutzt werden kann und nur in der Umschaltphase Energie verbraucht wird. Eine Kombination mit einer Wärmeschutzverglasung (K-Glas) ist sehr gut geeignet um eine dynamische Kontrolle der Sonneneinstrahlung durch ein Fenster hindurch zu gewährleisten ("smart window"). Somit kann ein elektrochromes System zur Regulierung und Begrenzung der notwendigen Energie zur Gebäudeklimatisierung beitragen.

Die Spannungsversorgung des Systems kann auch durch Solarmodule erfolgen. Ein lichtempfindlicher Sensor kann den Grad der Sonneneinstrahlung ermitteln und somit den Grad der Lichtdurchläßigkeit steuern.

### 3. Anzeigeelmente

Durch die farblich attraktive Gestaltungsmöglichkeit sowie die großflächige Darstellung beliebiger Konturen, z. B. Buchstaben, Zahlen, Zeichen und Symbole (durch geeignete Strukturierungstechniken herstellbar) ist ein für die Werbung interessantes Medium verfügbar. Dekorative und informative Effekte sind leicht möglich.

Neben der Möglichkeit, das System zwischen Glasscheiben anzuordnen besteht auch die Alternative zwei oder auch nur eine transparente Kunststofffolie als Träger zu verwenden. Dadurch werden plakatähnliche Werbemittel mit veränderbarer Information realisierbar.

Elektrochrome Vorrichtungen können für kleine Anzeigeelemente wie Zifferblätter von Uhren oder Meßinstrumenten, Displays für die unterschiedlichsten Anwendungen und für große Anzeigeelemente wie Verkehrsschilder, Litfaßsäulen, Anzeigen auf Bahnhöfen, Flugplätzen oder bei Parkleitsystemen verwendet werden. Der Einsatz als variables Linienbegrenzungssystems (Spielfeldbegrenzungen etc.) in Sporthallen ist ebenfalls möglich.

Die Verwendung ist generell dort möglich, wo Informationen sichbar gemacht werden sollen.

### 4. Optik

In der Optik ist die Verwendung elektrochromer Systeme sowohl in Kombination mit Gläsern, Linsen und Filter anderen optischer Geräte als auch als alleinige aktiv genutzte Komponente möglich. Die Anwendung als Überblendschutz für optische Detektionssysteme ist ebenfalls möglich. Als steuerbares Filtersystem bei photographischen Prozessen ist das System ebenfalls geeignet.

### 5. Spiegel

Eine elektrochrome Vorrichtung kann auch als abblendbarer Spiegel, z. B. im Automobil als Außen -oder Rückspiegel eingesetzt werden, der durch Anlegen einer elektrischen Spannung abgedunkelt werden kann und somit das Blenden durch Scheinwerfer fremder Fahrzeuge verhindet wird (vgl. z. B. US-A 3 280 702, US-A 4 902 108 (Gentex), EP-A 0 435 689, US-A 5 140 455). Nachteilig bei Systemen nach dem Stand der Technik (Lösungsysteme) ist die Farbinhomogenität nach längerem Betrieb (Segregation), insbesondere bei Spiegeln großer Abmessungen (z.B. LKW-Spiegel). Eine Erhöhung der Viskosität des Lösungssystems durch Zugabe von polymeren Verdickern wird beschrieben (z. B. US-A 4 902 108).

### 6. EMI shielding

Eine elektrochrome Vorrichtung kann auch als variables Filterelement zur Modulation elektromagnetischer Strahlung in bestimmten Wellenlängenbereichen eingesetzt werden.

Elektrochrome Vorrichtungen bestehen normalerweise aus einem Paar Glas- oder Kunststoffscheiben, von denen im Falle eines Spiegels, eine verspiegelt ist. Eine Seite dieser Scheiben ist mit einer lichtdurchlässigen, elektrisch leitfähigen Schicht, z. B. Indium-Zinn-Oxid (ITO), beschichtet. Aus diesen Scheiben wird eine Zelle aufgebaut, indem sie mit ihrer einander zugewandten elektrisch leitfähig beschichteten Seite fixiert werden, wobei die Zelle zwischen den Scheiben das elektrochrome System enthält. Sie ist dicht verschlossen. Über die leitfähige Schicht lassen sich die beiden Scheiben getrennt elektrisch kontaktieren und ansteuern.

Bei den aus dem oben zitierten Stand der Technik bekannten elektrochromen Lösungs-Systemen sind solche Paare von Redoxsubstanzen in einem Lösungsmittel enthalten, die nach Reduktion bzw. Oxidation farbige positiv oder negativ geladene Radikale, bilden, die chemisch reaktiv sind. Beispiele hierfür sind die seit langem bekannten Viologensysteme.

Als Paar von Redoxsubstanzen wird hierbei je eine reduzierbare und eine oxidierbare Substanz verwendet. Beide sind farblos oder nur schwach gefärbt. Unter Einfluß einer elektrischen Spannung wird die eine Substanz reduziert, die andere oxidiert, wobei wenigstens eine farbig wird. Nach Abschalten der Spannung bilden sich die beiden ursprünglichen Redoxsubstanzen wieder zurück, wobei Entfärbung bzw. Farbaufhellung auftritt.

Aus US-A 4 902 108 ist bekannt, daß solche Paare von Redoxsubstanzen geeignet sind, bei denen die reduzierbare Substanz wenigstens zwei chemisch reversible Reduktionswellen im cyclischen Voltammogramm und die oxidierbare Substanz entsprechend wenigstens zwei chemisch reversible Oxidationswellen besitzt. Systeme dieser Art kommen hauptsächlich für abblendbare Autorückspiegel in Frage. Da es sich hierbei um Lösungssysteme handelt kommt eine Anwendung in elektrochromen Fenstern unter normalen Umständen nicht in Betracht.

Es sind auch Systeme bekannt, bei denen das eigentliche elektrochrome Redoxpaar in einer Polymermatrix dispergiert ist (s. z.B. WO-A 96/03475). Der unerwünschte Effekt der Segregation wird hierbei unterdrückt.

Kombinationen anorganischer elektrochromer Komponeten, wie z. B. WO₃ , NiO oder IrO₂ sind ebenfalls bekannt und kommen als Komponeten in einem elektrochromen Fenster in Betracht (s. z.B. US-A 5 657 149, Electronique International No. 276, 16 (1997)).

Diese anorganischen elektrochromen Komponeten lassen sich nur durch Aufdampfen, Aufsputtern oder durch Sol-Gel-Technik auf dem leitfähigen Substrat aufbringen. Dies führt dazu, daß Systeme dieser Art sehr teuer in der Herstellung werden. In dem Bestreben, eine anorganische Komponente durch eine organische Polymerkomponente zu ersetzen, sind z. B. elektrochrome Systeme auf Basis des elektrisch leitfähigen Polymers Polyanilin (PANI) und WO₃ als komplementäre elektrochrome Materialien bekannt geworden (s. z.B. B.P. Jelle, G. Hagen, J. Electrochem. Soc., Vol. 140, Nor. 12, 3560 (1993)). Es wurde auch der Versuch unternommen, Systeme ohne eine anorganische Komponente einzusetzen, wobei die ITO oder SnO₂-Schicht (Gegenelektrode) als komplementäre elektrochrome Komponete zu substituierten Poly(3,4-ethylendioxythiophenen) dienen soll (US-A 5 187 608).

Es zeigt sich jedoch, daß derartige elektrochrome Anordnungen ungeeignet sind, um eine ausreichende Anzahl Schaltcyclen ohne Veränderung der Device-Eigenschaften zu gewährleisten. Außerdem ist der elektrochrome Schaltvorgang mittels Lithiumionen für manche Anwendungen nicht schnell genug. Es wurde nun gefunden, daß Protonen in der Elektrolyt-Schicht in Kombination mit Poly-(3,4-dioxythiophenen) zu einer deutlich kürzeren Schaltzeit führen.

Gegenstand der vorliegenden Erfindung sind elektrochrome Anordnungen in einem Schichtaufbau, dadurch gekennzeichnet, daß eine Schicht ein elektrisch leitfähiges, elektrochromes Polydioxythiophen, eine weitere Schicht einen eine Protonensäure (Brønsted-Säure) enthaltenden Elektrolyt und eine weitere Schicht einen Ionenspeicher oder eine Mischung von Ionenspeichern enthält.

Die Polydioxythiophene sind kationisch geladen und aus Struktureinheiten der Formel (I) 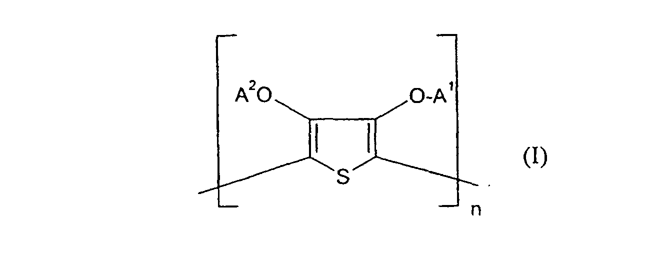 aufgebaut, in der
- A¹ und A²: unabhängig voneinander für gegebenenfalls substituiertes (C₁-C₄)-Alkyl stehen oder zusammen gegebenenfalls substituiertes (C₁-C₄)-Alkylen bilden, und
- n: für eine ganze Zahl von 2 bis 10.000 vorzugsweise 5 bis 5 000 steht,
in Gegenwart von Polyanionen.

Bevorzugte kationische Polydioxythiophene sind aus Struktureinheiten der Formel (Ia) oder (Ib) aufgebaut 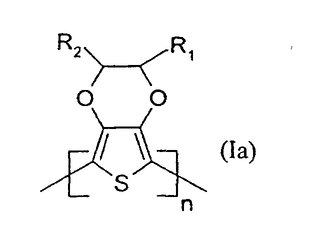 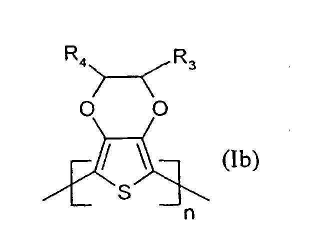 worin
- R₁ und R₂: unabhängig voneinander für Wasserstoff, gegebenenfalls substituiertes (C₁- C₁₈)-Alkyl, vorzugsweise (C₁-C₁₀)-, insbesondere (C₁-C₆)-Alkyl, (C₂-C₁₂)-Alkenyl, vorzugsweise (C₂-C₈)-Alkenyl, (C₃-C₇)-Cycloalkyl, vorzugsweise Cyclopentyl, Cyclohexyl, (C₇-C₁₅)-Aralkyl, vorzugsweise Phenyl-(C₁-C₄)-alkyl, (C₆-C₁₀)-Aryl, vorzugsweise Phenyl, Naphthyl, (C₁-C₁₈)-Alkyloxy, vorzugsweise (C₁-C₁₀)-Alkyloxy, beispielsweise Methoxy, Ethoxy, n-oder iso-Propoxy, oder (C₂-C₁₈)-Alkyloxyester steht und
- R₃, R₄: unabhängig voneinander für Wasserstoff, jedoch nicht beide gleichzeitig, mit mindestens einer Sulfonatgruppe substituiertes (C₁-C₁₈)-Alkyl, vorzugsweise (C₁-C₁₀)-, insbesondere (C₁-C₆)-Alkyl, (C₂-C₁₂)-Alkenyl, vorzugsweise (C₂-C₈)-Alkenyl, (C₃-C₇)-Cycloalkyl, vorzugsweise Cyclopentyl, Cyclohexyl, (C₇-C₁₅)-Aralkyl, vorzugweise Phenyl-(C₁-C₄)-alkyl, (C₆-C₁₀)-Aryl, vorzugweise Phenyl, Naphthyl, (C₁-C₁₈)-Alkyloxy, vorzugweise (C₁-C₁₀)-Alkyloxy, beispielsweise Methoxy, Ethoxy, n- oder iso-Propoxy oder (C₂-C₁₈)-Alkyloxyester steht,
- n: für eine Zahl von 2 bis 10 000, vorzugsweise 5 bis 5 000 steht.

Ganz besonders bevorzugt enthält der erfindungsgemäße elektrochrome Deviceaufbau mindestens ein elektrisch leitfähiges, elektrochromes kationisches oder neutrales Polydioxythiophen der Formeln (IIa) und/oder (IIb) 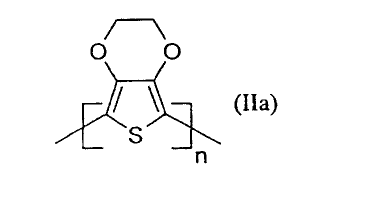 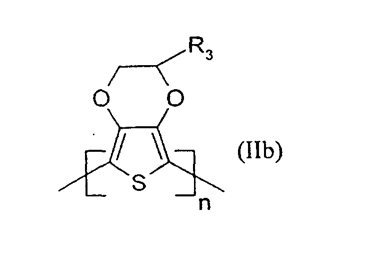 worin
- R₃: die obengenannte Bedeutung hat,
- n: für eine ganze Zahl von 2 bis 10 000, vorzugsweise 5 bis 5 000 steht.

Als Polyanionen dienen die Anionen von polymeren Carbonsäuren, wie Polyacrylsäuren, Polymethacrylsäuren, oder Polymaleinsäuren und polymeren Sulfonsäuren, wie Polystyrolsulfonsäuren und Polyvinylsulfonsäuren. Diese Polycarbon- und -sulfonsäuren können auch Copolymere von Vinylcarbon- und Vinylsulfonsäuren mit anderen polymerisierbaren Monomeren, wie Acrylsäureestern und Styrol sein.

Besonders bevorzugt ist das Anion der Polystyrolsulfonsäure als Gegenion.

Das Molekulargewicht der die Polyanionen liefernden Polysäuren beträgt vorzugsweise 1000 bis 2 000 000, besonders bevorzugt 2000 bis 500 000. Die Polysäuren oder ihre Alkalisalze sind im Handel erhältlich, z.B. Polystyrolsulfonsäuren und Polyacrylsäuren, oder aber nach bekannten Verfahren herstellbar (siehe z.B. Houben Weyl, Methoden der organischen Chemie, Bd. E 20 Makromolekulare Stoffe, Teil 2, (1987), S. 1141 u.f.).

Anstelle der für die Bildung der Dispersionen aus Polydioxythiophenen und Polyanionen erforderlichen freien Polysäuren, kann man auch Gemische aus Alkalisalzen der Polysäuren und entsprechenden Mengen an Monosäuren einsetzen.

Im Falle der Formel (IIb) tragen die Polydioxythiophene positive und negative Ladung in der Struktureinheit. Die Herstellung der Polydioxythiophene ist beispielsweise in EP-A 0 440 957 (=US-A 5 300 575) beschrieben.

Die Polydioxythiophene werden durch oxidative Polymerisation erhalten. Dadurch erhalten sie positive Ladungen, die in den Formeln nicht dargestellt sind, da ihre Zahl und ihre Position nicht einwandfrei festellbar sind.

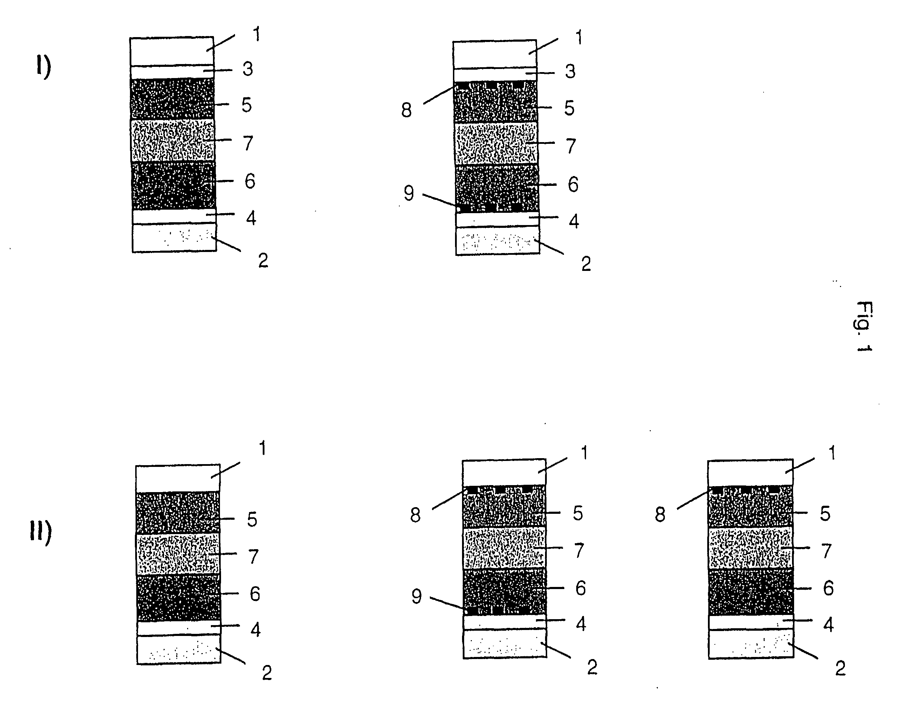

Die vorliegende Erfindung betrifft demnach einen elektrochromen Deviceaufbau mit elektrisch leitfähigen Poly(3,4-ethylendioxythiophen)-Derivaten als kathodisch einfärbenden elektrochromen Polymeren und dazu geeigneten Ionenspeicherschichten für Protonen. Ein Elektrolyt, bestehend aus einem vernetzten oder unvernetzten Polymer, einer Protonensäure und einer bestimmten Menge eines Lösungsmittels befindet sich zwischen der elektrochromen Polymerschicht und der Ionenspeicherschicht. Der schematische Aufbau ist in Fig. 1, Prinzip I) dargestellt.

Legende von Fig. 1:
1,2 : Substrat
3,4 : elektrisch leitfähige Beschichtung, wobei eine als Spiegel wirken kann
5 : Elektrochromes Polymer z.B. PEDT/PSS
6 : Ionenspeicherschicht
7 : Elektrolyt mit Protonensäure (vernetzt oder unvernetzt)
8,9 : feines Maschennetz aus Metall (optional)

Die elektrochrome Polymerschicht ist transparent im dotierten Zustand. Diese läßt sich durch Elektronenaufnahme (Reduktion) an der Kathode unter Zunahme der Extinktion im sichtbaren Bereich des Spektrum in eine gefärbte Form überführen. Die auf der gegenüberliegenden Seite (Anode) ablaufende Oxidation ist mit einer Austauschreaktion der Ionenspeicherschicht mit Protonen verknüpft. Diese Reaktion trägt jedoch kaum zur Farbgebung bei, so daß sie nicht störend ins Gewicht fällt.

Die vorliegende Erfindung betrifft demnach also ein lichtgeschütztes elektrochromes Festphasensystem, enthaltend mindestens ein redoxaktives elektrisch leitfähiges Polymer aus der Substanzklasse der Poly(3,4-alkylendioxythiophen)-Derivaten die zur Verarbeitbarkeit aus Lösung Polystyrolsulfonat beigemischt haben können, bzw. in einer Seitenkette eine lösungsvermittelnde Sulfonatgruppe tragen. Diese Polymerschicht wird bevorzugt aus wäßriger Lösung heraus aufgebracht, wobei nach Verdampfen des Lösungsmittels der feste, trockene Polymerfilm auf dem Substrat zurückbleibt. Sie soll jedoch auch durch Siebdruck aufzubringen sein. Als Substrate werden bevorzugt ein elektrisch leitfähiges, transparentes Glas- oder Foliensystem verwendet, wobei eine Schicht aus Indium-Zinn-Oxid (ITO), mit Fluor dotiertem Zinnoxid (FTO, K-Glas), undotiertem Zinnoxid oder eine Schicht aus feinverteiltem Silber als Elektrode dient. Es ist auch möglich, daß eine Elektrodenseite aus einer Metallschicht (wie z. B. Al, Cu, Pd) besteht, die nicht mehr transparent ist (bei Anwendung im Spiegel). Der Elektrolyt enthält mindestens ein Polymer (z. B. Polyethylenoxid, Polyvinylalkohol, Polyvinylpiperidin), mindestens eine Protonensäure (z.B. Phosphorsäure) und unter Umständen ein Lösungsmittel.

Die vorliegende Erfindung betrifft neben der Verwendung als elektrochrome Vorrichtung in der Gebäude bzw. Architekturverglasung und als Fahrzeugverglasung oder Sonnendach auch die Verwendung als Anzeigeelement (Display), als elektrochromer Spiegel (z.B. selbstabblendbarer Automobilrückspiegel) auch die Verwendung in verschiedenen optischen Elementen.

Für eine Anwendung als Spiegel kann eine der beiden Elektroden aus einem aufgedampften oder elektrochemisch abgeschiedenen Metallbelag bestehen, z.B. Aluminium, Silber, Kupfer, Platin, Palladium, Rhodium.

Die vorliegende Erfindung betrifft weiterhin auch ein lichtgeschütztes elektrochromes System, bei dem die farbgebende elektrochrome Polymerverbindung gleichzeitig als ihre eigene Elektrode fungiert, wodurch nur eine leitfähige Beschichtung aus ITO, Flur-dotiertem Zinnoxid oder einem Metall nötig ist. (s. Fig.1,Prinzip II))

### Legende von Fig. 1, Prinzip II:

1,2 : Substrat
4 : elektrisch leitfähige Beschichtung, die auch als Spiegel wirken kann
5 : Elektrochromes Polymer
6 : Ionenspeicherschicht
7 : Elektrolyt mit Protonensäure (vernetzt oder unvernetzt)
8,9 : feines Maschennetz aus Metall (optional)

Der erfindungsgemäße elektrochrome Aufbau zeichnet sich besonders bevorzugt dadurch aus, daß eine Kombination mit einem Wärmeschutzglas (käuflich für Architekturverglasungszwecke) explizit als positives Aufbau-Merkmal für Energiesparmaßnahmen von sonnendurchfluteten Räumen möglich ist und auch dem prallen Sonnenlicht ausgesetzt werden kann. Weitere explizite Elektroden aus anderem Material sind somit nicht nötig, da die Wärmeschutzschicht den Durchlaß der IR-Strahlung begrenzt und gleichzeitig durch die elektrische Leitfähigkeit die Elektrodenfunktion in dem elektrochromen Aufbau übernimmt.

Der erfindungsgemäße elektrochrome Aufbau zeichnet sich außerdem dadurch aus, daß die elektrochrome Schicht auch noch IR-Strahlung in bestimmten Bereichen absorbieren kann und somit den Wärmedurchgang durch die Scheibe begrenzen kann.

Der erfindungsgemäße elektrochrome Schichtaufbau ist als Bestandteil einer elektrochromen Vorrichtung geeignet. In einer elektrochromen Vorrichtung dient der erfindungsgemäße lichtgeschützte elektrochrome Schichtaufbau als Medium mit variabler Transmission, d.h. unter Einfluß einer elektrischen Spannung ändert sich die Lichtdurchlässigkeit des Systems, indem sie von einem farblosen in einen gefärbten Zustand übergeht. Weiterer Gegenstand der vorliegenden Erfindung sind demnach elektrochrome Vorrichtungen enthaltend einen erfindungsgemäßen lichtgeschützten elektrochromen Device-Aufbau. Anwendungen dieser elektrochromen Vorrichtung bestehen in der Architekturverglasung und in Verkehrsmitteln z.B. als Fensterscheibe, Autosonnendach, Automobil-Rückspiegel, Display oder als optisches Element, bzw. als Bestandteil von Informationsanzeigeeinheiten wie Instrumentenanzeigen in Fahrzeugen jeglicher Art. Die Verwendung als Fenster bei Gewächshäusern ist ebenfalls möglich.

Im Falle, daß die elektrochrome Vorrichtung eine elektrochrome Anzeigevorrichtung ist, sind mindestens eine der beiden leitfähigen Schichten bzw. beide in elektrisch voneinander getrennte Segmente aufgeteilt, die einzeln kontaktiert sind.

Es kann aber auch nur eine der beiden Platten leitfähig beschichtet und in Segmente aufgeteilt sein. Die Trennung der Segmente kann beispielsweise erfolgen durch mechanisches Entfernen der leitfähigen Schicht, z.B. durch Ritzen, Kratzen, Schaben oder Fräsen oder auf chemischem Wege beispielsweise durch Ätzen mittels beispielsweise einer salzsauren Lösung von FeCl₂ und SnCl₂. Diese Entfernung der leitfähigen Schicht kann über Masken, z.B. solchen aus Photolack, örtlich gesteuert werden. Es können aber auch die elektrisch getrennten Segmente durch gezieltes, z.B. mittels Masken, Aufbringen, z.B. Sputtern oder Drucken, der leitfähigen Schicht hergestellt werden. Die Kontaktierung der Segmente erfolgt beispielsweise mittels feiner Streifen aus leitfähigem Material, womit das Segment mit einem Kontakt am Rande der elektrochromen Vorrichtung elektrisch leitend verbunden ist. Diese feinen Kontaktstreifen können entweder aus dem gleichen Material bestehen, wie die leitfähige Schicht selbst und beispielsweise bei deren Aufteilung in Segmente, wie oben beschrieben, mit hergestellt werden. Sie können aber auch z.B. zur Verbesserung der Leitfähigkeit aus anderem Material wie feinen metallischen Leitern, beispielsweise aus Kupfer oder Silber, bestehen. Auch eine Kombination aus metallischem Material und dem Material der leitfähigen Beschichtung ist möglich. Diese metallischen Leiter können beispielsweise entweder in feiner Drahtform aufgebracht, z.B. aufgeklebt, werden oder aber aufgedruckt werden. Alle diese eben beschriebenen Techniken sind im allgemeinen aus der Herstellung von Flüssigkristalldisplays (LCD) bekannt.

Im Falle von Displays können die erfindungsgemäßen Anzeigen im Durchlicht oder auch reflektiv über eine Verspiegelung betracht werden.

Im Falle, daß die elektrochrome Vorrichtung ein elektrochromes Fenster ist, kann auf einer oder beiden Elektroden ein feines Maschennetz aus Metall aufgedampft sein. Dies dient der Verbesserung der Oberflächcnleitfähigkeit der Substrate und ist bei großen Flächen von Vorteil, um eine gleichmäßige Einfärbung zu erzielen.

Der erfindungsgemäße lichtgeschützte elektrochrome Device-Aufbau enthält bevorzugt mindestens eine transparente elektrisch leitfähige Beschichtung auf einem Substrat (Glas oder Kunststoff), bestehend aus Indium-Zinn-Oxid (In₂O₃ : SnO₂ (ITO)), Zinnoxid (SnO₂), Fluor-dotiertes Zinnoxid (SnO₂ : F; FTO oder "K-Glas", "Wärmeschutzglas"), Antimon-dotiertes Zinnoxid,Antimon-dotiertes Zinkoxid, Aluminiumdotiertes Zinkoxid oder einem transparenter Metallfilm mit genügend dünner Schichtdicke, z.B. Silberbeschichtung (Wärmeschutzglas).

Auch andere leitfähige Polymere wie gegebenenfalls substituierte Polythienyle, Polypyrrole, Polyaniline, Polyactetylen oder Polythiophene können verwendet werden.

Im erfindungsgemäßen lichtgeschützten Device-Aufbau ist das eigentliche elektrochrome Polymer auch bevorzugt auch als sein eigenes leitfähiges Elektrodenmaterial anstelle einer der oben genannten leitfähigen Beschichtungen einzusetzen.

Ganz besonders bevorzugt werden Indium-Zinn-Oxid (In₂O₃ : SnO₂ (ITO)), Zinnoxid (SnO₂), Fluor-dotiertes Zinnoxid (SnO₂ : F; FTO, "K-Glas", "Wärmeschutzglas") oder ein transparenter Silberbelag mit genügend dünner Schichtdicke (Wärmeschutzglas, z.B. ®PLANITHERM der Fa. Saint-Gobain oder Wärmeschutzfolie) verwendet.

Im Falle, daß eine der Scheiben verspiegelt ist, kann auch diese leitfähige Schicht genutzt werden. Besonders bevorzugt wird hier Siber, Aluminium, Kupfer, Platin, Palladium und Rhodium eingesetzt.

Der erfindungsgemäße lichtgeschützte elektrochrome Aufbau enthält bevorzugt einen transparenten Elektrolyten, der als Polymerelektrolyt oder Polyelektrolyt aufgefaßt werden kann und aus folgenden Komponenten besteht:
Polymer (vernetzt oder unvernetzt)
Protonensäure.

Als bevorzugte Polymere kommen hierbei Polymethylmethacrylat (PMMA), Polyethylenoxid (PEO), Polyvinylalkohol (PVA), Polyvinylpiperidin (PVP), Polystyrolsulfonsäure (PSS), Polyvinylsulfonsäure (PolyVSA), Poly(2-acrylamido-2-methylpropansulfonsäure (PolyAMPS), Polyethylensulfonsäure (PolyESA), Polyacrylnitril (PAN), Poly(N,N-dimethylacrylamid), Poly(2-(2-methoxyethoxy)-ethoxy)phosphazen, Poly(oxymethylen-oligo(oxyethylen)), Polyethylenglycole (PEG), Polypropylenglycole (PPG) oder Polymere auf Basis von Polyepichlorhydrin oder Polyether sowie Mischungen in Frage. Außerdem Copolymere wie Ethylenoxidpropylenoxid-(EO/PO)-Copolymer oder oxymethylen-verbrückte Polyethylenoxide.

Besonders bevorzugt werden Polyether und Polyethylenoxide verwendet, die auch vernetzt sein können.

Besonders bevorzugt sind auch modifizierte Siloxane aus z.B. gamma-Glycidylpropyltrimethoxysilan. Dabei kann es sich auch um Polypropylenoxid-modifizierte Varianten handeln.

Die Elektrolyten können neben den UV-Absorbern auch organische und/oder anorganische Füllstoffe oder Zusätze enthalten. Hier können die üblichen Additive wie z.B. Thermostabilisatoren, optische Aufheller, Flammschutzmittel, Fließhilfsmittel, Farbmittel, Pigmente, Füll- oder Verstärkungsstoffe, fein zerteilte Mineralien, Faserstoffe, Kreide, Quarzmehl, Glas, Aluminiumoxid, Aluminiumchlorid und Kohlenstoffasern in üblichen Mengen zugesetzt sein. Die Funktion eines Abstandshalter kann z.B. von Glaskugeln, Polymerpartikeln, Kieselgel oder Sandkörnern mit definierter Größe übernommen werden, falls dies notwendig ist.

Als bevorzugte Protonensäuren kommen Sulfonsäuren, insbesondere Trifluormethansulfonsäure, Phosphorsäure oder Imidazol-Verbindungen in Frage. Die Protonensäuren können in Elektrolyten gelöst vorliegen oder in einem Polymer immobilisiert vorliegen, beispielsweise Polystyrolsulfonsäure.

Ganz besonders bevorzugt ist hierbei die Phosphorsäure.

Als Substrat werden im erfindungsgemäßen lichtgeschützten elektrochromen Aufbau Glas oder verschiedene Sorten Kunststoff eingesetzt.

Bevorzugt sind im allgemeinen transparente Substrate jeglicher Art.

Als besonders bevorzugte Materialien neben Glas, speziell Wärmeschutzglas bei Anwendung als elektrochromes Fenster, (in Schichtdicken von 10 µm bei "flexiblem Glas, Dünnglas" bis 3 cm) kommen Polyester (z.B. Polyethylenterephthalat (PET)), oder Polyethylennaphthalat (PEN) verschiedene Typen von Polycarbonat (z.B. ®Makrolon, APEC-HT), Polysulfone, Polyimide sowie Polycycloolefine in Frage. Das polymere Substrat kann dabei als flexible Folie oder als dicke Platte zum Einsatz kommen. Das Substat kann auch gekrümmt vorliegen, so daß sich der Schichtaufbau der Form der Unterlage anpaßt. Ein flexibles Kunststoffsubstrat kann nach dem Aufbau des elektrochromen Gesamtsystems auch auf verschiedene Unterlagen, wie z.B. gekrümmtes Glas, auflaminiert oder aufgeklebt werden.

Die Kunsstoffsubstrate können zusätzlich noch mit Sperrschichten gegen Wasser und Sauerstoff versehen sein.

Bevorzugt kommen hier TiOₓ, SiOₓ auf Polyester, z.B. Polyethylenterephthalat, Du Pont, (vgl. Verpackungsfolien) oder fluorierte Polymere sowie mögliche Kombinationen daraus sowie auch Sperrschichten auf Basis von anorganisch-organischen Hybridsystemen in Frage.

Der erfindungsgemäße elektrochrome Aufbau kann bei der Gestaltung als flexibles Foliensystem als komplettes elektrochromes Verbundsystem auf die Sicherheitsscheiben von Autos auflaminiert oder geklebt werden. Außerdem kann er in den Hohlraum eines Verbundglasscheibensystems in die Architekturverglasung integriert werden.

Der Steuermechanismus des elektrochromen Aufbaus beruht auf der reversiblen elektrochemischen Dotierung des elektrochromen Polymers, was sich in kräftigen Farbänderungen beispielsweise von farblos zu blau äußert. Der Aufbau wird mit definierten Spannungen angesteuert.

Die Reduktions- und Oxidationsprozesse in dem erfingsgemäßen elektrochromen Aufbau erfolgen im allgemeinen durch Elektronenaufnahme bzw. -abgabe an der Kathode bzw. Anode, wobei zwischen den Elektroden vorzugsweise eine Potentialdifferenz von 0,1 bis 5 V, ganz besonders bevorzugt 0,1 bis 3 V herrscht. Nach Abschalten des elektrischen Potentials kann die vorher erzielte Einfärbung eine längere Zeit aufrecht erhalten werden (Memory-Effekt), so daß man mit minimalen Energieverbrauch eine permanente Einfärbung erzielen kann. Durch kurzzeitiges Umpolen kann spontan ein Ladungsausgleich und damit Entfärbung erreicht werden.

Der erfindungsgemäße elektrochrome Aufbau ist auch bei größeren Flächen dadurch gekennzeichnet, daß eine Versorgung mittels Solarmodule möglich ist.

Zur besseren Benetzung der Substrate kann auch ein Benetzungsmittel (z.B. Fluortensid) zugesetzt werden.

### Beispiele:

### Beispiel 1

### Aufbringen eines elektrochromen Polymers auf ein leitfähiges Substrat

Das Polymer Baytron® P (wäßrige Dispersion des leitfähigen Polymers PEDT/PSS, Polyethylendioxythiophen-polystryrolsulfonat der Fa. Bayer AG) 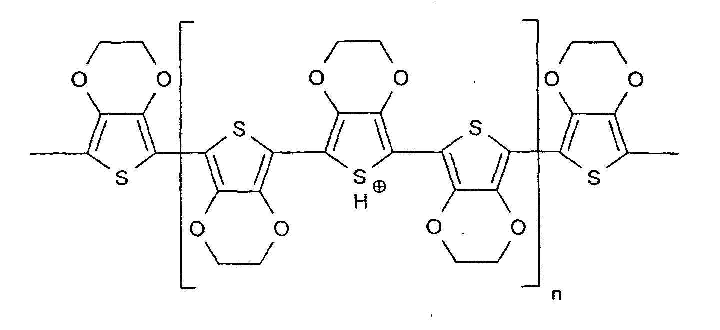 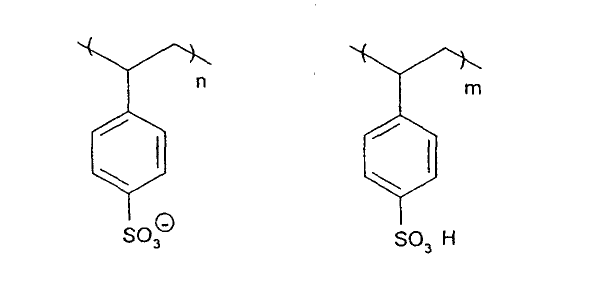 wird aus wäßriger Lösung, die noch Isopropanol enthält, mit einer Lackschleuder 4 mal mit je 15 Sekunden bei einer Umdrehungsgeschwindigkeit von 1500 U/min. auf die elektrisch leitfähige Seite einer K-Glas-Scheibe (Wärmeschutzglas der Fa. Flachglas, Oberflächenwiderstand ∼20 Ω/sq) aufgebracht. Während dem Aufbringen wird mittels eines Föns das Lösungsmittel abgedampft.

Man erhält einen durchsichtigen, nur ganz leicht bläulich gefärbten Polymerfilm. Eine Messung der Schichtdicke mit einem Profilometer ergab einen Wert von 0,6 µm.

### Beispiel 2

### Aufbringen einer Ionenspeicherschicht aus Nickeloxid auf K-Glas

In einer wäßrigen Lösung aus Nickelsulfat, NiSO₄·6H₂O (0,1 m) und Ammoniumhydroxid, NH₄OH (0,1 m) scheidet man anodisch bei einer Spannung von 3 V Nickeloxid-Hydrat auf der leitfähig beschichteten SnO₂:F-Seite von K-Glas ab (Dauer: 10 bis 20 Sekunden). Die damit erhaltene, leicht bräunlich gefärbte Beschichtung wird anschließend 1 Stunde lang bei 200°C getempert. Dadurch erhält man völlig transparente Nickeloxid-Schichten, die als Ionenspeicherschichten in etektrochromen Anordnungen geeignet sind.

### Beispiel 3

### Herstellen des Elektrolyten

2 g Polyethylenoxid (PEO; MW = 200 000) werden mit 1 g wasserfreier Phosphorsäure versetzt und gut verrührt. Man erhält einen zähflüssigen Elektrolyten, der gebrauchsfertig ist.

### Beispiel 4

### Fertigstellung der kompletten elektrochromen Zelle

Der Elektrolyt aus Beispiel 3 wird auf die Ionenspeicherschicht aus Beispiel 2 mit einer Filmdicke von 200 µm aufgebracht und mit der elektrochromen PEDT/PSS-Schicht aus Beispiel 1 in Kontakt gebracht. Nach Verkleben der Zellränder erhält man eine funktionstüchtige elektrochrome Zelle.

### Beispiel 5

Die Zelle aus Beispiel 4 wird durch Anlegen von 2,5 V einer Gleichspannungsquelle auf ihre Funktion hin überprüft. Durch Umpolen der Spannung lassen sich beide Zustände (eingefärbt/entfärbt) demonstrieren.

## Patentansprüche

1. Elektrochrome Anordnungen in einem Schichtaufbau, **dadurch gekennzeichnet, daß** eine Schicht ein elektrisch leitfähiges, elektrochromes Polydioxythiophen, eine weitere Schicht einen eine Protonensäure enthaltenden Elektrolyt und eine weitere Schicht einen Ionenspeicher oder eine Mischung von Ionenspeichern enthält.

2. Elektrochrome Anordnungen gemäß Anspruch 1, **dadurch gekennzeichnet, daß** die Polydioxythiophene kationisch geladen und aus Struktureinheiten der Formel (I) 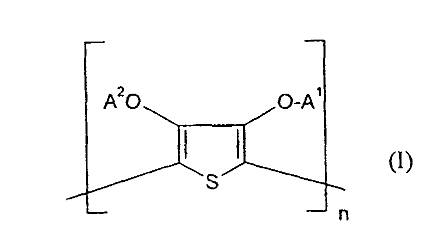 aufgebaut sind, in der
A¹ und A² unabhängig voneinander für gegebenenfalls substituiertes (C₁-C₄)-Alkyl stehen oder zusammen gegebenenfalls substituiertes (C₁-C₄)-Alkylen bilden, und
n für eine ganze Zahl von 2 bis 10.000 steht,
und die Gegenionen Polyanionen sind.

3. Elektrochrome Anordnungen gemäß Anspruch 2, **dadurch gekennzeichnet, daß** die Polydioxythiophene aus Struktureinheiten der Formel (Ia) oder (Ib) aufgebaut sind 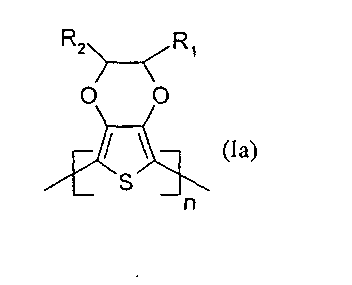 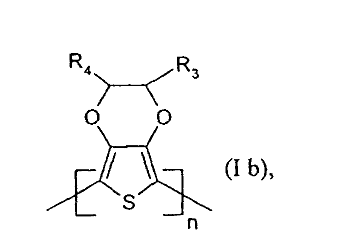 worin
R₁ und R₂ unabhängig voneinander für Wasserstoff, gegebenenfalls substituiertes (C₁-C₁₈)-Alkyl, (C₂-C₁₂)-Alkenyl, (C₃-C₇)-Cycloalkyl, (C₇-C₁₅)-Aralkyl, (C₆-C₁₀)-Aryl, (C₁-C₁₈)-Alkyloxy oder (C₂-C₁₈)Alkyloxyester stehen und
R₃ und R₄ unabhängig voneinander für Wasserstoff, jedoch nicht beide gleichzeitig, mit mindestens einer Sulfonatgruppe substituiertes (C₁-C₁₈)-Alkyl, (C₂-C₁₂)-Alkenyl, (C₃-C₇)-Cycloalkyl, (C₇-C₁₅)-Aralkyl, (C₆-C₁₀)-Aryl, (C₁-C₁₈)-Alkyloxy oder (C₂-C₁₈)-Alkyloxyester stehen,
n für eine Zahl von 2 bis 10 000 steht.

4. Elektrochrome Anordnungen gemäß Anspruch 3, **dadurch gekennzeichnet, daß** die Polydioxythiophene aus Struktureinheiten der Formel (IIa) oder (IIb) aufgebaut sind 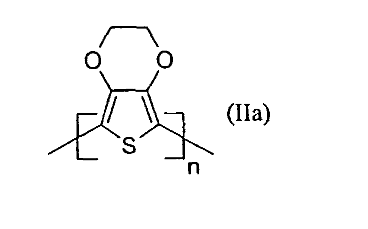 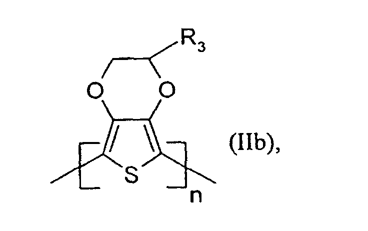 worin
R₃ und n die in Anspruch 3 genannte Bedeutung hat.

5. Elektrochrome Anordnungen gemäß Anspruch 2, **dadurch gekennzeichnet, daß** die Polyanionen Anionen von polymeren Carbonsäuren und/oder polymeren Sulfonsäuren sind.

6. Elektrochrome Anordnungen gemäß Anspruch 1, **dadurch gekennzeichnet, daß** mindestens eine transparente elektrisch leitfähige Beschichtung auf einem Substrat enthalten ist.

7. Elektrochrome Anordnungen gemäß Anspruch 1, **dadurch gekennzeichnet, daß** das leitfähige Elektrodenmaterial ein elektrisch leitfähiges Polydioxythiophen ist.

8. Elektrochrome Anordnungen gemäß Anspruch 1, **dadurch gekennzeichnet, daß** ein transparenter Elektrolyt enthalten ist, der folgende Komponenten enthält:
Polymer (vernetzt oder unvernetzt)
Protonensäure.

## Claims

1. Electrochromic assemblies having a layer structure, **characterized in that** one layer comprises an electrically conductive, electrochromic polydioxythiophene, a further layer comprises an electrolyte containing a protic acid and a further layer comprises an ion reservoir compound or a mixture of ion reservoir compounds.

2. Electrochromic assemblies according to Claim 1, **characterized in that** the polydioxythiophenes are cationically charged and are built up of structural units of the formula (I) 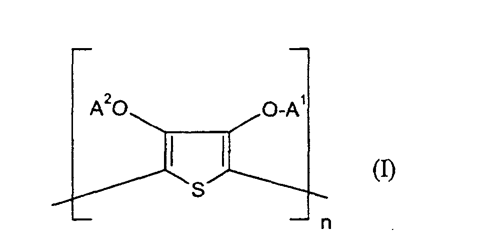 where
A¹ and A² represent, independently of one another, substituted or unsubstituted (C₁-C₄)-alkyl or together form substituted or unsubstituted (C₁-C₄)-alkylene, and
n represents an integer from 2 to 10,000,
and the counterions are polyanions.

3. Electrochromic assemblies according to Claim 2, **characterized in that** the polydioxythiophenes are built up of structural units of the formula (Ia) or (Ib) 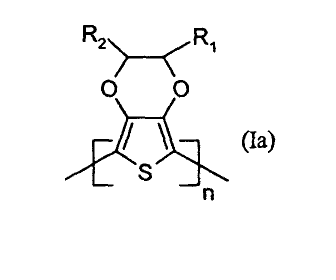 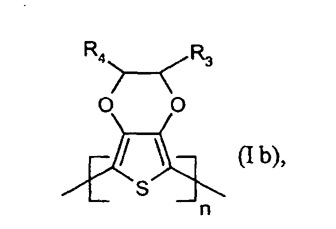 where
R₁ and R₂ represent, independently of one another, hydrogen, substituted or unsubstituted (C₁-C₁₈)-alkyl, (C₂-C₁₂)-alkenyl, (C₃-C₇)-cycloalkyl, (C₇-C₁₅)-aralkyl, (C₆-C₁₀)-aryl, (C₁-C₁₈)-alkyloxy or (C₂-C₁₈)-alkyloxy ester and
R₃ and R₄ represent, independently of one another, hydrogen, but not both at the same time, or (C₁-C₁₈)-alkyl, (C₂-C₁₂)-alkenyl, (C₃-C₇)-cycloalkyl, (C₇-C₁₅)-aralkyl, (C₆-C₁₀)-aryl, (C₁-C₁₈)-alkyloxy or (C₂-C₁₈)-alkyloxy ester, each substituted by at least one sulphonate group,
n represents a number from 2 to 10,000.

4. Electrochromic assemblies according to Claim 3, **characterized in that** the polydioxythiophenes are built up of structural units of the formula (IIa) or (IIb) 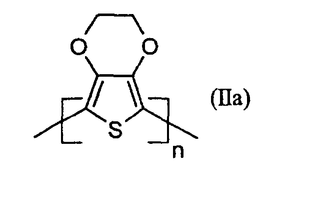 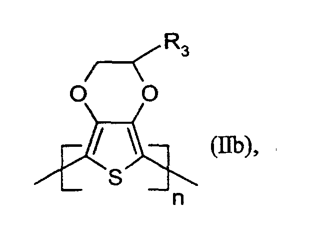 where
R₃ and n are as defined in Claim 3.

5. Electrochromic assemblies according to Claim 2, **characterized in that** the polyanions are anions of polymeric carboxylic acids and/or polymeric sulphonic acids.

6. Electrochromic assemblies according to Claim 1, **characterized in that** at least one transparent, electrically conductive coating on a substrate is present.

7. Electrochromic assemblies according to Claim 1, **characterized in that** the conductive electrode material is an electrically conductive polydioxythiophene.

8. Electrochromic assemblies according to Claim 1, **characterized in that** a transparent electrolyte comprising the following components:
polymer (crosslinked or uncrosslinked)
protic acid
is present.

## Revendications

1. Dispositifs électrochromes à structure lamellaire, **caractérisés en ce qu'**une couche contient un polydioxythiophène électrochrome conducteur de l'électricité, une autre couche contient un électrolyte qui contient lui-même un acide protonique et une autre couche contient une réserve d'ions ou un mélange de réserve d'ions.

2. Dispositifs électrochromes selon la revendication 1, **caractérisés en ce que** les polydioxythiophènes ont une charge cationique et sont constitués de motifs de structure de formule (I) 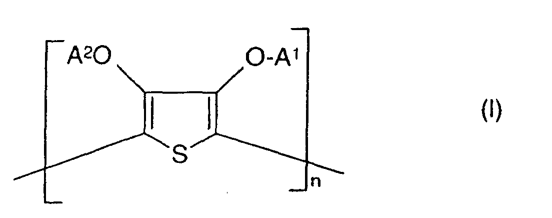 dans laquelle
A¹ et A² représentent chacun, indépendamment l'un de l'autre, un groupe alkyle en C₁-C₄ éventuellement substitué ou forment ensemble un groupe alkylène en C₁-C₄ éventuellement substitué, et
n est un nombre entier allant de 2 à 10 000,
et les ions complémentaires sont des polyanions.

3. Dispositifs électrochromes selon la revendication 2, **caractérisés en ce que** les polydioxythiophènes sont constitués de motifs de structure de formule (Ia) ou (Ib) 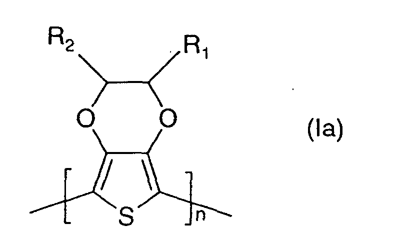 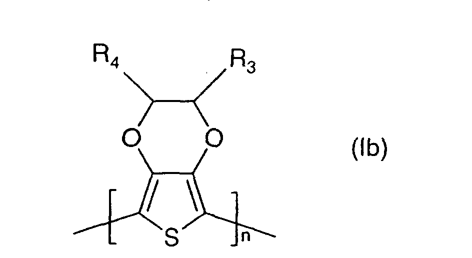 dans lesquelles
R₁ et R₂ représentent chacun, indépendamment l'un de l'autre, l'hydrogène, un groupe alkyle en C₁-C₁₈ éventuellement substitué, alcényle en C₂-C₁₂, cycloalkyle en C₃-C₇, aralkyle en C₇-C₁₅, aryle en C₆-C₁₀, alkyloxy en C₁-C₁₈ ou alkyloxyester en C₂-C₁₈, et
R₃ et R₄ représentent chacun, indépendamment l'un de l'autre, l'hydrogène, mais ne peuvent représenter tous deux l'hydrogène, un groupe alkyle en C₁-C₁₈, alcényle en C₂-C₁₂, cycloalkyle en C₃-C₇, aralkyle en C₇-C₁₅, aryle en C₆-C₁₀, alkyloxy en C₁-C₁₈ ou alkyloxyester en C₂-C₁₈, substitué par au moins un groupe sulfonate,
n est un nombre allant de 2 à 10 000.

4. Dispositifs électrochromes selon la revendication 3, **caractérisés en ce que** les polydioxythiophènes sont constitués de motifs de structure de formule (IIa) ou (IIb) 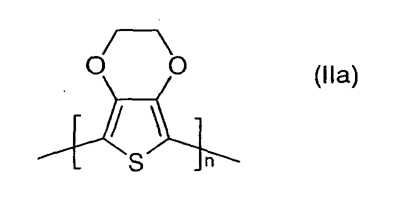 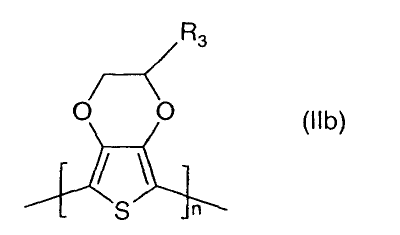 dans lesquelles
R₃ et n ont les significations indiquées dans la revendication 3.

5. Dispositifs électrochromes selon la revendication 2, **caractérisés en ce que** les polyanions sont des anions d'acides carboxyliques polymères et/ou d'acides sulfoniques polymères.

6. Dispositifs électrochromes selon la revendication 1, **caractérisés en ce qu'**ils contiennent au moins un revêtement transparent conducteur de l'électricité sur un support.

7. Dispositifs électrochromes selon la revendication 1, **caractérisés en ce que** la matière d'électrode conductrice est un polydioxythiophène conducteur de l'électricité.

8. Dispositifs électrochromes selon la revendication 1, **caractérisés en ce qu'**ils contiennent un électrolyte transparent, contenant lui-même les composants suivants :
polymère (réticulé ou non)
acide protonique.
